# EUROPÄISCHE PATENTSCHRIFT

(11) **EP 0 876 890 B1**
(45) Veröffentlichungstag und Bekanntmachung des Hinweises auf die Patenterteilung: **19.12.2001**
(21) Anmeldenummer: 98106591.5
(22) Anmeldetag: 09.04.1998
(51) Int. Cl.: B29C 39/02, B29C 67/20, C08F 2/32, C08J 9/28

(54) **Formkörper sowie Verfahren und Vorrichtung zu ihrer Herstellung**
Mouldings, process and apparatus for producing the same
Objets moulés, procédé et appareil pour les produire

(30) Priorität: 03.05.1997 DE 19718570
(43) Veröffentlichungstag der Anmeldung: 11.11.1998
(73) Patentinhaber: SACMI COOPERATIVA MECCANICI IMOLA S.c.r.l., 40026 Imola (Bologna) (IT)
(72) Erfinder: Will, Günther, Dr., 64283 Darmstadt (DE)
(74) Vertreter: Lanzoni, Luciano

(56) Entgegenhaltungen:
- WO-A-85/02578
- FR-A- 2 022 594
- US-A- 5 033 950
- US-A- 5 254 599

## Beschreibung

Die Erfindung betrifft neuartige Formkörper auf der Basis eines gehärteten Kunststoff-Bindemittels, das einen oder mehrere kornförmige Füllstoffe, vorzugsweise geringer Dichte, enthält, sowie Verfahren und Vorrichtungen zu ihrer Herstellung, ferner ihre Verwendung, insbesondere als Bau- und Konstruktionsmaterialien.

Das Einbringen von kornförmigen Feststoffen bzw. Zuschlagstoffen in ein Bindemittel erfolgt, wie z.B. aus der Bauindustrie bekannt ist, durch Mischen des Bindemittels mit den Zuschlägen, nachfolgende Formgebung und Härtung. Das Einbringen des hydraulisch härtenden Bindemittels mit dem Zuschlag in den Formraum erfolgt z.B. durch freies Fließen unter gleichzeitiger Verdichtung durch Rütteln oder Einwirkung von Druck auf die einfließende Masse. Bei Verwendung einer geschlossenen Form, in welche die Formmasse eingefüllt wird, kann nach einem Verfahren gemäß DE 24 55 634 durch Evakuieren der Form der Gießvorgang beschleunigt und das Material höher verdichtet werden. Außerdem kann die Form mit einem Grobzuschlag vorgefüllt und das Druckgefälle gegenüber dem atmosphärischen Druck zur Formfüllung ausgenutzt werden.

Ähnliche Techniken sind aus der Verarbeitung von Gießharzen bekannt, beispielsweise das Ausschäumen einer mit Füllstoffen gefüllten Form mit Reaktionsschäumen aus Polyurethan oder Phenolharz (DE 17 04 853).

Härtbare Formmassen, wie Gießharze auf der Basis von Polyestern, Poly(meth)acrylaten (flüssigen Vorpolymerisaten) oder Epoxyharzen, werden bekanntlich mit oder ohne Füllstoffe in einen evakuierten Raum oder in eine geschlossene, evakuierte Form mit Unterstützung des atmosphärischen Außendrucks in Formen verfüllt (DE 1 146 245; DE 143 624).

Zur Füllung von Formen wird schließlich auch die Zentrifugalkraft ausgenutzt. Um einen feinkörnigen Füllstoff (z.B. Mikrohohlglaskugeln) in ein dünnflüssiges Harz, wie ein Epoxyharz oder ein Polyesterharz, einzubringen, um daraus Formkörper herzustellen, wird eine Form mit dem Füllstoff gefüllt, wonach mit dem flüssigen Harz überschichtet und zentrifugiert wird. Das Harz dringt dabei unter gleichzeitiger Entlüftung in die durch den Füllstoff gebildeten leeren Zwischenräume ein und bildet nach Härtung einen weitgehend blasenfreien, leichten Werkstoff (EP 0 151 461).

Die Herstellung und Verarbeitung von härtbaren W/O-Emulsionen, die in der Ölphase mit Wasser emulgierbare Monomere und/oder Gießharzeenthalten,zusammenmit kornförmigen Feststoffenistebenfallsbekannt(DE 32 41 798, US-A-5,033,950); bei dieser Verfahrensweise werden die Feststoffe mit einer W/O-Emulsion gemischt, worauf nach Formgebung im offenen Guß oder nach Gießen der Masse unter einem Preßdruck ausgehärtet wird. Von erheblichem Nachteil bei diesen Verfahren sind der Mischprozeß, der eine Einstellung einer kurzen Topfzeit und eine rasche Aushärtung nur mit hohem apparativem Aufwand erlaubt, ferner die Emission von Monomeren und die relativ hohen Mengen von Rückständen aus dem Mischprozeß.

Es war daher bisher nicht möglich, W/O-Emulsionen zu feinporösen Formkörpern auszuhärten, insbesondere zu einer Matrix mit kornförmigen Feststoffen. Voraussetzung hierfür ist, daß die durch die Emulsion vorgegebene disperse Verteilung des Wassers in der Harzkomponente über den Verarbeitungs- und Härtungsprozeß hinaus erhalten bleibt. Deswegen sind eine gut stabilisierte W/O-Emulsion und eine rasche und schonende Verarbeitung, möglichst in einem geschlossenen System, Vorbedingungen für die praktische Anwendbarkeit solcher W/O-Emulsionen.

W/O-Emulsionen, vor allem mit höherem Wassergehalt, sind in der Regel thixotrop. Die Anwendung von Druck bringt daher keine Vorteile, zumal sich die Druckwirkung beim Einleiten in eine mit kornförmigen Füllstoffen bepackte Form sehr rasch erschöpft. Versuche haben gezeigt, daß Unterdruck bei einem wirksamen Druckgefälle leicht zum Absaugen von Wasser aus der Emulsion führt.

Die beschriebenen Probleme lassen sich mit den bekannten Verfahren nicht überwinden.

Aufgabe der Erfindung ist es daher, Kunststoff-Formkörper, die kornförmige Füllstoffe enthalten, sowie ein Verfahren und eine Vorrichtung zu ihrer Herstellung anzugeben, ferner auch die Verwendung der Formkörper als Werkstoffe, insbesondere als Formteile für Bau- und Konstruktionszwecke. Dabei soll die Verwendung von emulgierbaren, vorzugsweise mit Wasser emulgierbaren, härtbaren Harzen als Bindemittelmatrix ermöglicht werden.

Nachdem W/O-Emulsionen in der äußeren, kontinuierlichen Phase aus Harz und/oder Monomeren bestehen, nahm man an, daß ein guter Verbund mit Füllstoffen nur durch Zumischen der trockenen Feststoffe zur Emulsion zu gewährleisten ist. Überraschend ergaben Versuche, daß diese Annahme, die bei Verwendung von Harzen ohne Zusatz von Wasser zutrifft, nicht ohne weiteres auf mit Wasser emulgierbare Harze in Form von W/O-Emulsionen übertragbar ist.

Die Aufgabe wird durch die unabhängigen Ansprüche gelöst. Die abhängigen Ansprüche betreffen vorteilhafte Ausführungsformen der Erfindungskonzeption.

Das erfindungsgemäße Verfahren zur Herstellung von Formkörpern auf der Basis eines gehärteten Bindemittels, das einen oder mehrere kornförmige Füllstoffe enthält, beruht auf
- dem Einbringen des bzw. der kornförmigen Füllstoffe sowie eines flüssigen härtbaren Bindemittels in eine Form,
- dem Härten des Bindemittels in der Form und
- der Entnahme des gebildeten Formkörpers aus der Form;
es ist gekennzeichnet durch Vornahme folgender Verfahrensschritte in der angegebenen Reihenfolge:
(A) Einbringen des kornförmigen Füllstoffs bzw. der kornförmigen Füllstoffe in die Form,
(B) Auffüllen der Form mit einer niedrigviskosen, mit dem Bindemittel nicht mischbaren oder weitgehend nicht mischbaren Flüssigkeit, die gegenüber dem Bindemittel inert oder im wesentlichen inert ist, unter Entlüftung der Form,
(C) Ersetzen der Flüssigkeit in der Form durch das flüssige härtbare Bindemittel,
(D) Härten des Bindemittels
   und
(E) Entnahme des gebildeten Formkörpers aus der Form.

Die inerte Flüssigkeit, vorzugsweise Wasser, dient beim erfindungsgemäßen Verfahren als eine Art Platzhalter für das später in die Form eingeführte Harzsystem, das die inerte Flüssigkeit dann ersetzt. Hierdurch lassen sich blasenfreie Bindemittelmatrices bzw. Formkörper herstellen.

Nach einer vorteilhaften Ausführungsform wird in Schritt B die inerte Flüssigkeit unter hydrostatischem Druck oder unter Pumpdruck durch Einlaufenlassen von oben oder von unten in die Form eingeführt.

Gemäß einer besonders einfachen Ausführungsform des erfindungsgemäßen Verfahrens können die Schritte A und B auch gemeinsam in einem einzigen Schritt durchgeführt werden, beispielsweise, indem eine zuvor hergestellte Dispersion bzw. Suspension des Füllstoffs in der inerten Flüssigkeit in die Form eingebracht wird, wobei entlüftet wird.

Diese Verfahrensweise ist besonders bei schwierig benetzbaren Füllstoffen, auf deren Oberfläche sich Luftbläschen festsetzen können, vorteilhaft.

Im Rahmen der Erfindung wird günstigerweise in Schritt C wie folgt verfahren:
(a) das Bindemittel wird unter hydrostatischem Druck oder unter Pumpdruck von oben in die Form eingeführt, und die inerte Flüssigkeit wird im unteren Teil der Form austreten gelassen oder abgepumpt,
   oder
(b) das Bindemittel wird unter hydrostatischem Druck oder unter Pumpdruck oder durch Ansaugen von unten in die Form eingeführt, und die inerte Flüssigkeit wird im oberen Teil der Form austreten gelassen oder abgepumpt.

In beiden Fällen wird die inerte Flüssigkeit durch das eingeführte Bindemittel ersetzt bzw. verdrängt.

Vorteilhaft wird im Rahmen der Erfindung in Schritt C als Bindemittel ein polymerisierbares Harzsystem verwendet, das ein oder mehrere polymerisierbare Monomere und gegebenenfalls ein oder mehrere polymerisierbare Prepolymere enthält.

Günstig geeignet sind beim erfindungsgemäßen Verfahren als Bindemittel Polyesterharzsysteme, Epoxyharzsysteme sowie (Meth)acrylatharzsysteme.

Nach einer besonders bevorzugten Ausführungsform des erfindungsgemäßen Verfahrens wird in Schritt C ein Bindemittel in Form einer Wasser-in-Öl-Emulsion eingesetzt, deren Ölphase das Bindemittel bzw. Bindemittelsystem enthält oder aus ihm besteht.

In diesen Fällen wird in Schritt B eine inerte Flüssigkeit eingesetzt, die befähigt ist, die disperse Phase einer Emulsion oder einen Teil der dispersen Phase einer Emulsion zu bilden, deren kontinuierliche Phase das härtbare Bindemittel enthält oder aus ihm besteht, vorzugsweise Wasser, besonders bei W/O-Emulsionen.

Erfindungsgemäß können beliebige Füllstoffe eingesetzt werden, solange sie die Formgebung und Härtung des Bindemittels nicht beeinträchtigen.

Beispiele für geeignete, in Schritt A einsetzbare kornförmige Füllstoffe sind anorganische und/oder organische Füllstoffe, insbesondere Ruß, Graphit, Kreide, Gips, Zement, Aluminiumoxid, Aluminiumhydroxid, Kaolin, Phosphate, Ammoniumpolyphosphat, Montmorillonit, geblähte Mineralien, insbesondere Tone, Silicate oder Glas, und/oder organische Polymerpartikel, insbesondere geschäumte Polymerpartikel, wie etwa Polystyrol- oder Polyurethanschaumpartikel.

Der Begriff 'inert' bedeutet im Zusammenhang mit der in Schritt B in die Form eingeführten Flüssigkeit, daß diese per se mit dem in Schritt C in die Form eingeführten Harzsystem nicht reagiert und auch weder eine inhibierende noch eine katalysierende Wirkung besitzt und auch ggf. eine Bindemittelemulsion nicht bricht. Die inerte Flüssigkeit kann jedoch ggf. Zusätze enthalten, die solche Wirkungen aufweisen, insbesondere Härter und/oder Härtungsbeschleuniger.

Damit eignen sich neben Wasser auch beliebige andere Flüssigkeiten, besonders organische Flüssigkeiten.

Die inerte Flüssigkeit kann auch weitere Zusätze enthalten, die zur Einstellung des Lösungsvermögens dienen, oder etwa grenzflächenaktive Mittel zur Verbesserung der Benetzung des Füllstoffs.

Der Ausdruck 'niedrigviskos' soll zum Ausdruck bringen, daß die inerte Flüssigkeit eine hinreichend niedrige Viskosität aufweist, um die Kornzwischenräume und sonstigen Leerräume in der Form in Schritt B möglichst vollständig auffüllen und ausfüllen zu können, und damit der Füll- und Entleerungsvorgang ausreichend rasch vonstatten gehen kann. Die Auswahl einer inerten Flüssigkeit mit geeigneter Viskosität für eine gegebene Härtungstemperatur, die im wesentlichen vom Harzsystem abhängt, liegt im Rahmen des fachmännischen Könnens.

Der in Schritt A eingesetzte kornförmige Füllstoff besitzt vorzugsweise eine Korngröße im Bereich von etwa 1 bis etwa 16 mm und noch bevorzugter im Bereich von etwa 2 bis etwa 8 mm und hat vorzugsweise eine Rohdichte ≤ 1,5 g/ml.

Die Schüttdichte (apparente Dichte) beträgt bevorzugt ≤ 1,0 g/ml.

Nach einer weiteren bevorzugten Ausführungsform des erfindungsgemäßen Verfahrens werden die inerte Flüssigkeit und das Harzsystem, einschließlich der jeweiligen Zusätze, so gewählt, daß sich in Schritt C in situ eine Emulsion mit der inerten Flüssigkeit als disperser Phase bildet oder eine solche Emulsion vervollständigt wird. Dabei kann vorzugsweise der bei Schritt C in der Form bzw. auf und zwischen den Füllstoffpartikeln verbleibende Anteil an inerter Flüssigkeit zur Bildung der Emulsion dienen.

Die Schritte B, C, und D werden bevorzugt in einer geschlossenen Form durchgeführt.

Da die Härtungsgeschwindigkeit und damit die Härtungsdauer des Harzsystems in Schritt D bei gegebener Härtermenge im wesentlichen von der Temperatur abhängen, ist es in vielen Fällen günstig, die Form und den darin enthaltenen Füllstoff durch eine entsprechend temperierte inerte Flüssigkeit auf eine gewünschte Temperatur zu bringen, um so, ggf. auch durch Zusatz von entsprechend temperiertem Bindemittel in Schritt C, eine gewünschte Reaktionstemperatur einzustellen.

Der Härter für das Harzsystem, der bevorzugt nicht vorab mit dem Harz gemischt, sondern in Schritt C aus einem separaten Vorratsbehälter in einer dem Formeinlaß vorgeschalteten Mischkammer zu dem einströmenden Harz zudosiert wird, ist bevorzugt flüssig. Er kann jedoch auch als Lösung oder in einer Emulsion vorliegen. Im Rahmen der Erfindung kann der Härter jedoch auch in einem separaten vorgeschalteten Schritt mit dem Harz gemischt werden, wonach dann das reagierende Gemisch in die Form eingeführt wird. Das Harzsystem kann ferner Zusätze enthalten, die auf dem Gebiet der Gießharze üblich und dem Fachmann geläufig sind. Hierzu gehören auch Füllstoffe. Im Gegensatz zu den in Schritt A eingesetzten kornförmigen Füllstoffen liegen diese Füllstoffe in der Harzphase oder im Falle einer Bindemittelemulsion in einer der Emulsionsphasen vor. Art und Korngröße dieser Füllstoffe unterliegen keiner Beschränkung, sofern sie die Härtung der Harzphase nicht stören.

Die erfindungsgemäße Vorrichtung zur Herstellung von Formkörpern auf der Basis eines gehärteten Bindemittels, das einen oder mehrere kornförmige Füllstoffe enthält, die insbesondere zur Durchführung des erfindungsgemäßen Verfahrens geeignet ist, weist folgende wesentliche Komponenten auf:
(i) eine Form,
(ii) einen ggf. mit der Form verbindbaren Vorratsbehälter für kornförmige Füllstoffe,
(iii) einen mit der Form verbindbaren Vorratsbehälter für eine niedrigviskose, mit dem Bindemittel nicht mischbare oder weitgehend nicht mischbare, gegenüber dem Bindemittel inerte oder im wesentlichen inerte Flüssigkeit,
(iv) einen mit der Form verbindbaren Vorratsbehälter für ein flüssiges, härtbares Bindemittel,
(v) eine Füll- und Entleereinrichtung, die mit dem Einlaß und dem Auslaß der Form und dem Vorratsbehälter für inerte Flüssigkeit, dem Vorratsbehälter für Bindemittel und dem Vorratsbehälter für Härter verbunden ist und die gesteuerte Zufuhr und Abführung der inerten Flüssigkeit und die gesteuerte Zufuhr des Bindemittels erlaubt,
   und
(vi) eine Steuereinrichtung, welche die Füll- und Entleereinrichtung steuert und so ausgebildet ist, daß folgende Schritte durchführbar sind:
   (a) Auffüllen der Form, die den Füllstoff enthält, mit der inerten Flüssigkeit bei gleichzeitiger oder nachgeschalteter Entlüftung der Form
      und
   (b) Einleiten des härtbaren Bindemittels und des Härters in die Form unter Ersatz der inerten Flüssigkeit.

Schritt (a) kann auch, wie oben zu den Verfahrensschritten A und B erläutert, so durchgeführt werden, daß die Form mit einer zuvor hergestellten Dispersion oder Suspension des Füllstoffs in der inerten Flüssigkeit gefüllt wird.

Die Füll- und Entleereinrichtung und die Steuereinrichtung der erfindungsgemäßen Vorrichtung sind bevorzugt so ausgebildet, daß sie auch die gesteuerte Zufuhr des Füllstoffs aus dem Vorratsbehälter für den Füllstoff in die Form vor Schritt (a) über eine entsprechende Zufuhreinrichtung erlauben.

Nach einer weiteren bevorzugten Ausführungsform ist die Steuereinrichtung so ausgebildet, daß sie auch die Steuerung der Härtung des Bindemittels nach Schritt (b) nach Zeit und/oder Temperatur erlaubt.

Besonders bevorzugt ist bei der erfindungsgemäßen Vorrichtung eine mit der Form und der Füll- und Entleereinrichtung verbundene Mischkammer vorgesehen, die mit dem Vorratsbehälter für Bindemittel und dem Vorratsbehälter für Härter sowie ggf. auch mit dem Vorratsbehälter für Füllstoff und ggf. mit dem Vorratsbehälter für inerte Flüssigkeit verbunden ist und in der die Verweilzeit, besonders des Bindemittels, kurz genug ist, um durch Polymerisation bzw. Vernetzung bedingte Verstopfungen oder Inkrustationen zu verhindern.

Die Füll- und Entleereinrichtung und die Steuereinrichtung sind ferner vorteilhaft so ausgebildet, daß sie die Zufuhr der inerten Flüssigkeit aus einem Vorratsbehälter in den Auslaß der Form sowie die Abführung der inerten Flüssigkeit aus der Form in den Vorratsbehälter zurück über eine Pumpe erlauben.

Die Steuereinrichtung ist günstigerweise ein Mikrocomputersystem mit einer zentralen Recheneinheit (CPU), einem Schreib/Lese-Speicher (RAM), einem Festwertspeicher (ROM) und einem Bussystem, das nach vorgegebenem bzw. vorgebbarem Programm die Füll- und Entleereinrichtung steuert, durch welche die Schritte (a) und (b) bzw. die Verfahrensschritte A, B, C und/oder D gesteuert werden.

Die Steuereinheit kann ferner eine Eingabeeinheit, z.B. ein Keyboard oder eine andere Tastatur, sowie eine Anzeigeeinrichtung, z.B. einen Bildschirm, aufweisen, welche Eingabeinformationen, z.B. Prozeßinformationen und andere betriebsrelevante Informationen, anzeigt. Ferner kann eine Ausgabeeinheit vorgesehen sein, z.B. ein Drucker, mit dem Informationen, etwa zur Protokollierung, ausgedruckt werden können.

Nach der Entformung wird der erhaltene Formkörper erforderlichenfalls getrocknet, besonders, wenn zur Erzielung einer Porosität eine Emulsion, insbesondere eine W/O-Emulsion, verwendet wurde, da die nichtreaktive, disperse Phase, besonders Wasser, durch Platzhalterwirkung bei der Härtung Poren erzeugt.

Der Verbund einer Matrix aus einer W/O-Emulsion mit dem nassen kornförmigen Füllstoff ist im Vergleich mit der Haftung der betreffenden Harzmatrix an einem trockenen Füllstoff überraschenderweise mindestens ebenso gut.

Von besonderem Vorteil ist die Verarbeitung in einem weitgehend geschlossenen System mit monomerhaltigen W/O-Emulsionen als Bindemittel, die in einem geschlossenen Behälter gebildet, gelagert und bei Bedarf auch mit höherer Viskosität unmittelbar der Form zugeleitet werden können.

Nach einer Ausführungsform des Verfahrens wird über die inerte Flüssigkeit der Form und dem Füllstoff Wärme zu- und abgeführt, um den Härtungsprozeß zu steuern. Nachdem die inerte Flüssigkeit grundsätzlich wiederverwendbar ist, kann diese in einem Kreislauf geführt werden, in dem die Temperatur geregelt wird.

Das erfindungsgemäße Verfahren bietet gegenüber dem Stand der Technik wesentliche Vorteile und neue Möglichkeiten, besonders bei der Herstellung größerer Formteile bei Verwendung von W/O-Emulsionen.

Bindemittel und kornförmiger Füllstoff bleiben bis zu ihrer Zusammenführung in Schritt C getrennt. Das härtbare Bindemittel enthält vorteilhaft einen Katalysator oder einen Härtungsbeschleuniger und kann so vorbereitet gelagert werden. Die fehlende Härtungskomponente wird vorteilhaft kurz vor dem Einführen in die Form z.B. mit einer Dosierpumpe zugegeben und z.B. mit einem statischen Mischer eingemischt.

Die Auffüllung der Form mit dem Bindemittel erfolgt in der Regel in wenigen Minuten. Auch bei höherer Viskosität läuft das Bindemittel gleichmäßig, der ablaufenden bzw. verdrängten inerten Flüssigkeit folgend in die Form. Ein aufwendiges Mischen von Bindemittel und Füllstoff entfällt daher erfindungsgemäß. Die Verarbeitungszeit wird abgekürzt und kann der Topfzeit des Bindemittels leicht angepaßt werden. Die Aushärtung des Bindemittels erfolgt in der Form. Rückstände bzw. Verluste an Bindemittel entstehen praktisch nicht.

Nachdem bei der Einführung des Bindemittels in die Form nur ein geringer Druck auf die bereits gefüllte Form ausgeübt wird, kann der konstruktive Aufwand auf ein Minimum reduziert werden.

Es genügt ferner u.U. bereits, eine nach oben offene, nach unten lediglich mit einem Ablauf versehene Form mit dem kornförmigen Füllstoff und der inerten Flüssigkeit aufzufüllen und dann mit dem Bindemittel zu überschichten, welches so die zugleich abgelassene oder, um den Vorgang zu beschleunigen, abgepumpte inerte Flüssigkeit ersetzt.

Nach dem erfindungsgemäßen Verfahren können günstig auch Formkörper mit unterschiedlich ausgebildeten Schichten hergestellt werden. So können beispielsweise Platten hergestellt werden, die beidseitig mit einer Glasfasermatte versehen sind. Hierzu werden z.B. die Glasfasermatten so in die Form gebracht, daß sich der Füllstoff dazwischen befindet. Die Glasfasermatten werden einwandfrei eingebunden. Auch Schichten mit Füllstoffpartikeln unterschiedlicher Korngröße und unterschiedlicher Dichte sind möglich. Die gute Einbindung von Glasfasermatten beweist, daß auch bei unterschiedlichen Schüttdichten die kornförmigen Füllstoffe gut in die Matrix einzubinden sind. In der Form können ferner Hohlräume oder Elemente zur Aussteifung vorgesehen werden.

Im Fall der Verwendung von Bindemitteln in Form von W/O-Emulsionen können dem Wasser, das zunächst in die Form eingeleitet wird, gegebenenfalls Mittel zugegeben werden, welche die Emulsion stabilisieren, W/O-Emulgatoren zur Verbesserung der Haftung der Matrix, dispergierte Polymere zur Unterstützung der Härtungsreaktion aus der wäßrigen Phase, wasserlösliche Verbindungen, Formaldehyd-Sulfoxylat (Rongalit), Triethanolamin, als flammhemmende bzw. feuerhemmende Mittel Natrium- oder Kaliwasserglas u.a.m..

Die W/O-Emulsion besteht aus einem härtbaren, flüssigen, mit Wasser, gegebenenfalls mit Hilfe von W/O-Emulgatoren, emulgierbaren Bindemittel, das unter dem Einfluß von Initiatoren und Beschleunigern auch in Gegenwart von Wasser auszuhärten ist. Zusammensetzung, Herstellung und Härtung dieser W/O-Emulsionen sind dem Fachmann bekannt; Beispiele sind Gießharze, wie Polyesterharze, Epoxyharze, Prepolymere von (Meth)-acrylaten u.a. in Emulsionsform.

Polyesterharze bzw. Polyesterharzsysteme sind besonders geeignet.

Neben Wasser kann die Emulsion pulverförmige Füllstoffe, wie z.B. Kreide, Gips, Zement, Aluminiumhydroxid, Kaolin, Ammoniumpolyphosphat oder wasserlösliche Verbindungen, Borax u.a., enthalten, sofern hierdurch die W/O-Emulsion nicht bricht. Die Viskosität der Emulsion muß dem Verarbeitungsverfahren angepaßt sein. Auch dies ist dem Fachmann geläufig.

Die ggf. mit den verschiedenen Zusätzen gemischte W/O-Emulsion muß fließfähig und stabil sein, damit sie bei Abfluß, Abpumpen oder Verdrängen des Wassers in den Raum zwischen den Teilchen des kornförmigen Füllstoffs eindringen und ihn ausfüllen kann.

Für die Durchführung des erfindungsgemäßen Verfahrens sind die freien Zwischenräume im Haufwerk und die Korngröße des Füllstoffs, die vorzugsweise nicht kleiner als etwa 2 mm sein sollte, von Bedeutung. Normalerweise genügt die Auffüllung einer Form mit der sich ergebenden Schüttdichte des Feststoffes. Man erhält dann eine gleichmäßige Verteilung der Matrix. Eine Verdichtung des Feststoffs in der Form ist möglich, besonders, wenn er in Form einer Suspension in der inerten Flüssigkeit in die Form eingebracht wird.

Bei Verwendung von W/O-Emulsionen kann das Verhältnis von Harz zu Wasser im Bereich von etwa 0:0,1 bis 1:5,0 variiert werden (Massenverhältnis).

Je geringer der Wasseranteil der Emulsion ist, desto größer kann der Füllstoffanteil in der Emulsion sein. Die Produkteigenschaften lassen sich so von einem Polymerbeton bis zu einem sehr feinporigen Schaum mit besonderen Eigenschaften verändern.

Mit dem Aushärten der Harzemulsion entsteht ab einem Verhältnis von Wasser zu Harzanteilen von etwa 1:1 ein offenes, mit Wasser gefülltes mikrozelluläres Produkt, das nach der Trocknung besonders günstige schall- und wärmedämmende Eigenschaften neben einer hohen mechanischen Festigkeit besitzt. Es ist jedoch auch je nach Art des Emulgators möglich, eine geschlossenporige Matrix, die das Wasser sehr langsam abgibt, zu erzeugen (z.B. mit Triethanolamin und einem Polyestergießharz).

Die Wärmeleitzahl für ein ausgehärtetes und getrocknetes feinporöses Produkt liegt z.B. bei einer Dichte ≤ 0,3 g/ml bei 0,05; die Druckfestigkeit beträgt etwa 2,0 bis 18,0 N/mm². Für 50 mm dicke Platten mit einer flächenbezogenen Masse von 24 kg/m² wurde ein bewerteter Schalldämmwert von 35 dB gefunden.

Das zeigt, daß härtbare W/O-Emulsionen als Bindemittelmedium aufgrund ihrer Eigenschaften besonders günstige verwendbare Produkte ergeben, nicht zuletzt, weil sich der Harzanteil im Endprodukt mit kornförmigen Füllstoffen auf ein Minimum (bis etwa 6,0 Masse-%) reduzieren läßt.

Nach dem erfindungsgemäßen Verfahren hergestellte wärme- und schalldämmende, leichte Formteile, die z.B. zur Erstellung von Trennwänden geeignet sind, können aufgrund ihrer variablen Eigenschaften und des geringen Aufwands bei der Herstellung besonders günstig im Baubereich verwendet werden.

Von den kornförmigen Füllstoffen werden anorganische Materialien mit einer Dichte bis etwa 1,5 g/ml, einer Schüttdichte ab etwa 0,15 g/ml und mit Korngrößen im Bereich von 1 bis 16 mm bevorzugt. Die genannten Parameter können jedoch erforderlichenfalls ohne weiteres geändert werden. Derartige Produkte sind z.B. unter den Bezeichnungen Blähton, Blähglas und Foamglas bekannt. Grundsätzlich können beliebige Materialien als kornförmige Füllstoffe verwendet werden, wenn sie im härtbaren Bindemittel und in der inerten Flüssigkeit weitgehend unlöslich sind.

Die flüssigen Bindemittel lassen sich mit Druck in die feinverzweigten Zwischenräume einer mit kornförmigem Material (z.B. einer Korngröße von 2 bis 4 mm) gefüllten Form kaum einbringen, insbesondere, wenn sie höhere Viskosität aufweisen und sich thixotrop verhalten.

Auch durch Anwendung von Druck und bei gleichzeitigem Anlegen von Unterdruck auf der Gegenseite der Form ist eine kontinuierliche Auffüllung bei Füllstoffen gröberer Körnung nur begrenzt möglich. Der Druckverlust wird mit steigendem Füllungsgrad mit Emulsion immer höher, und der Preßdruck auf das lockere Gefüge führt zu einer Verdichtung des Kornhaufwerks. Hinzu kommen die mit diesem Verfahren verbundene Emission von Monomeren und die Materialverluste. Durch das erfindungsgemäße Verfahren können die erheblichen Nachteile der bisherigen Verfahren zur Formkörperherstellung beseitigt und neue, interessante Produkte erhalten werden, die sich für zahlreiche Anwendungen eignen.

Von Vorteil ist die Verwendung eines weitgehend geschlossenen Systems. Der härtbare Anteil des Bindemittels wird lagerfähig vorbereitet und erst unmittelbar bei seiner Verwendung nach Zudosieren eines Beschleunigers in die mit dem Füllstoff gepackte und mit der inerten Flüssigkeit gefüllte Form eingebracht, vorteilhaft durch Ablassen oder Abpumpen der inerten Flüssigkeit aus der Form.

Über die Füllung mit der inerten Flüssigkeit kann die Temperatur von Form und Füllstoff reguliert und damit die Härtungsreaktion gesteuert werden.

Über die inerte Flüssigkeit lassen sich ferner Agentien einbringen, die über die auf der Oberfläche der Körner noch vorhandene Restfeuchte wirksam werden können.

Insbesondere bei Verwendung von W/O-Emulsionen mit Gießharzen ist der rasche, gleichmäßige und das Füllstoff-Haufwerk nicht zerstörende Austausch der inerten Flüssigkeit gegen Bindemittel völlig überraschend und für die Verarbeitung von wesentlicher Bedeutung, da der Füllstoff im Endprodukt sehr gleichmäßig verteilt ist.

Die Durchführung des Verfahrens ist allgemein mit jedem flüssigen Bindemittel möglich, das bei dem nicht zu umgehenden Kontakt mit der inerten Flüssigkeit und besonders Wasser nicht zersetzt wird oder aufgrund von Reaktionen nicht in die Zwischenräume eindringen kann.

Die Erfindung umfaßt ferner auch die nach dem erfindungsgemäßen Verfahren erhältlichen Formkörper, die sich aufgrund der neuartigen Herstellung strukturell von nach herkömmlichen Verfahren erhältlichen Formkörpern unterscheiden.

Die Erfindung umfaßt ferner auch die Verwendung der Formkörper, insbesondere als Baustoffe und zur Herstellung von Baustoffen, besonders als Leichtbaustoffe sowie zur Herstellung von Leichtbaustoffen.

Das erfindungsgemäße Verfahren und die erfindungsgemäße Vorrichtung werden im folgenden anhand von Ausführungsbeispielen unter Bezug auf die Zeichnungen näher erläutert.

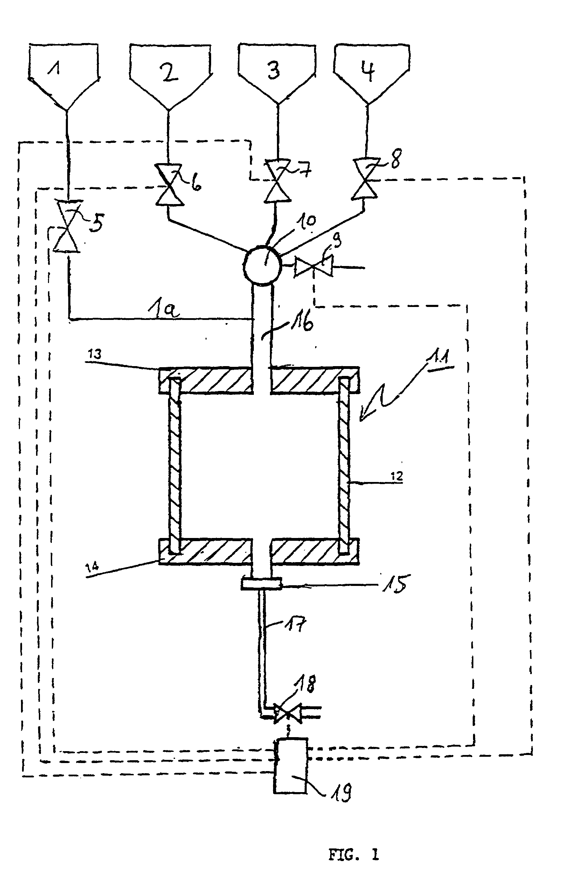

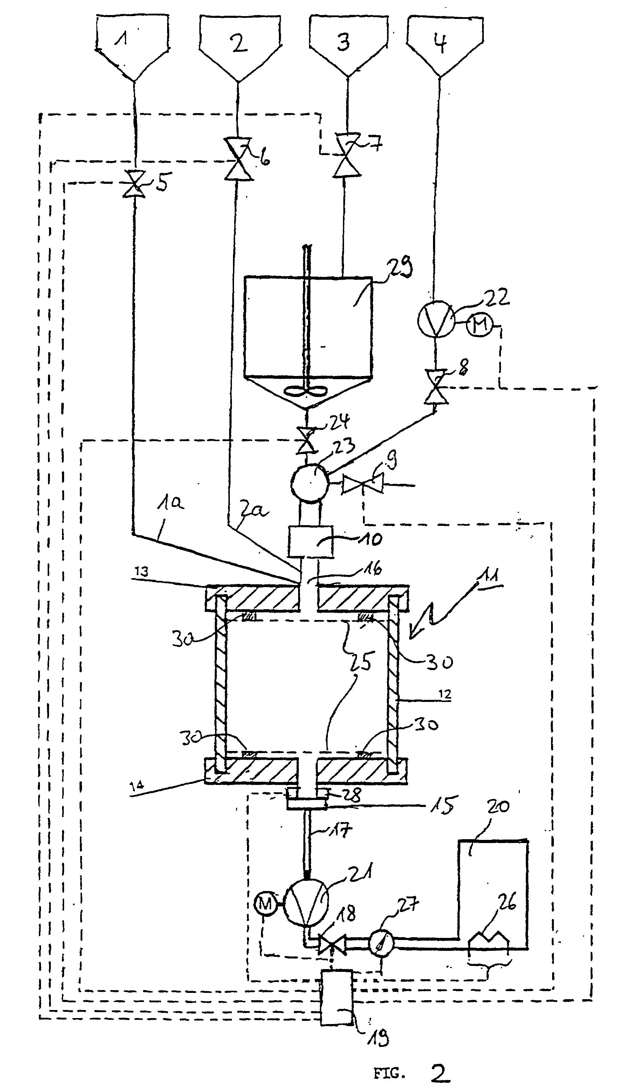

Die Figuren 1 und 2 zeigen erfindungsgemäße Vorrichtungen.

Fig. 1 zeigt das Prinzip der erfindungsgemäßen Vorrichtung.

Die in Fig. 1 schematisch dargestellte Vorrichtung umfaßt einen Vorratsbehälter 1 für den Füllstoff, einen Vorratsbehälter 2 für die inerte Flüssigkeit, einen Vorratsbehälter 3 für das Bindemittel und einen Vorratsbehälter 4 für den Härter, das Vernetzungsmittel o.dgl. .

Die Vorratsbehälter 2, 3, 4 sind über Ventile 6, 7, 8 und entsprechende Leitungen mit einer Mischkammer 10 verbunden, die mit einem Entlüftungsventil 9 versehen ist. Der Vorratsbehälter 1 ist über ein Ventil 5 mit der Form 11 bzw. der in die Form 11 mündenden oberen Leitung 16 verbunden.

Die Leitung 1a soll in schematischer Form darstellen, daß der Vorratsbehälter 1 für den kornförmigen Füllstoff in irgendeiner geeigneten Weise mit der Form 11 verbunden oder verbindbar ist. So kann der Vorratsbehälter z.B. entweder mit der Mischkammer 10 oder mit der oberen Leitung 16 oder mit einer Öffnung der Form 11 verbunden oder verbindbar sein. Die Leitung 1a kann auch einen einfachen Auslauf darstellen, aus dem der kornförmige Füllstoff in die Form eingefüllt werden kann.

Die Vorratsbehälter 1, 2 können auch vereinigt in Form eines einzigen Vorratsbehälters vorliegen, der dann eine Füllstoffdispersion bzw. -suspension enthält und ggf. mit einem Rührer ausgerüstet ist. Die Ventile 5 und 6 sind in diesem Fall durch ein einziges Ventil ersetzt.

Das Ventil 5 ist nicht zwingend erforderlich; ob es vorgesehen ist, hängt von der Bauform des Vorratsbehälters 1 und der Betriebsweise der Vorrichtung ab.

Die Mischkammer 10 ist über die obere Leitung 16 mit dem oberen Anschluß der Form 11 verbunden. Die zerlegbar ausgeführte Form 11 weist einen Formmantel 12, ein Formoberteil 13, ein Formunterteil 14 und einen Bodenanschluß 15 auf, der über eine untere Leitung 17 mit einem Ventil 18 verbunden ist, über das z.B. die in der Form befindliche inerte Flüssigkeit abgelassen oder abgepumpt werden kann. Der Auslaß des Ventils 18 kann mit dem Vorratsbehälter 2 verbunden sein, ggf. über ein Zwischengefäß. Er kann aber auch in einen beliebigen Auffangbehälter münden.

Die Form 11 ist zerlegbar und weist Schnellschlußkupplungen auf.

Die Ventile 5, 6, 7, 8, 9 und 18 sind mit einer Steuereinrichtung 19 verbunden. Die Ventile sind vorzugsweise Magnetventile oder motorisch betätigte Absperrorgane. Die Steuereinrichtung 19 steuert die Ventile 5, 6, 7, 8, 9 und/oder 18 in der Weise, daß ein Teil der Verfahrensschritte A bis D oder sämtliche Verfahrensschritte A bis D automatisch durchgeführt werden.

Die erfindungsgemäße Vorrichtung von Fig. 1 kann selbstverständlich auch im Sinne des Verfahrens bei manueller Betätigung der Ventile betrieben werden. Dann kann die Steuereinrichtung 19 entfallen.

Die Arbeitsweise wird im folgenden anhand der Verwendung einer W/O-Bindemittelemulsion erläutert.

Zunächst wird die Form 11 mit dem Füllstoff aus dem Vorratsbehälter 1 gefüllt (Schritt A). Danach wird die Form 11 mit der inerten Flüssigkeit, im vorliegenden Fall Wasser, aus dem Vorratsbehälter 2 über das Ventil 6 und die Mischkammer 10 aufgefüllt, wobei über das Ventil 9 entlüftet wird. Das Entlüftungsventil 9 kann auch an einer anderen Stelle im oberen Teil der Form 11 vorgesehen sein. Alternativ kann der Vorratsbehälter 2 über das Ventil 6 auch mit der oberen Leitung 16 verbunden sein.

Die Füllung der den Füllstoff enthaltenden Form 11 mit Wasser kann alternativ auch so erfolgen, daß über das Ventil 18 Wasser aus einem Vorratsbehälter über die untere Leitung 17 und den Bodenanschluß 15 in die Form 11 hineingedrückt wird, beispielsweise mit Hilfe einer Pumpe. Dabei gestaltet sich die Entlüftung besonders einfach.

Die Form 11 weist vorteilhaft zumindest im Bereich des oberen oder des unteren Anschlusses für die obere bzw. untere Leitung 16 bzw. 17 ein Rückhalteorgan auf, z.B. ein Netz, ein Sieb oder eine Sieb- oder Lochplatte, um ein Ausspülen von Füllstoffteilchen beim Füllen der Form 11 mit der inerten Flüssigkeit bzw. dem Bindemittel zu verhindern.

Wenn die mit dem Füllstoff beladene Form 11 mit dem Wasser gefüllt ist (Schritt B), wird das Wasser durch das Bindemittel ersetzt, das aus dem Vorratsbehälter 3 über das Ventil 7 in die Mischkammer 10 eingespeist wird, wo es mit Härter aus dem Vorratsbehälter 4, der über das Ventil 8 und ggf. eine Dosierpumpe in die Mischkammer 10 eingeführt bzw. eindosiert wird.

Das reagierende Gemisch, im vorliegenden Beispiel die O/W-Emulsion, gelangt aus der Mischkammer 10 über die obere Leitung 16 in die Form 11, wobei das Wasser über die untere Leitung 17 und das Ventil 18 verdrängt wird (Schritt C). Eine weitere Entlüftung ist hierbei in aller Regel nicht erforderlich.

Anschließend findet die Aushärtung des Bindemittels in der Form 11 statt (Schritt D). Nach Ablauf der Härtungszeit wird der gebildete Formkörper nach Zerlegen der Form 11 entnommen (Schritt E) und erforderlichenfalls getrocknet.

Da die Wasserphase der Emulsion ihrem Volumenanteil entsprechende Hohlräume im fertigen, getrockneten Formkörper hinterläßt, ist der Formkörper mehr oder weniger porös.

Auf diese Weise lassen sich besonders günstig Leichtbaustoffe mit hohem Wärme- und Schalldämmungsvermögen erzeugen, besonders, wenn auch Füllstoffe mit geringer apparenter Dichte, etwa geschäumte oder geblähte Füllstoffe, verwendet werden.

Die Form 11 kann vorteilhaft so ausgebildet werden, daß zur raschen und einfachen Entnahme des Formkörpers in Schritt E die Leitungsanschlüsse, z.B. die obere Leitung 16 und die untere Leitung 17, nicht entfernt oder abmontiert werden müssen.

Es ist so möglich, in kurzen Zeitabständen Formkörper im quasikontinuierlichen Betrieb herzustellen.

Fig. 2 zeigt ebenfalls schematisch eine weitere erfindungsgemäße Vorrichtung, deren prinzipieller Aufbau dem von Fig. 1 entspricht, wobei gleiche Elemente mit gleichen Bezugszahlen bezeichnet sind. Auch bei dieser Vorrichtung sind Vorratsbehälter 1, 2, 3 und 4 vorgesehen, die zur Aufbewahrung von Füllstoff, inerter Flüssigkeit, Bindemittel bzw. Härter dienen.

Der Vorratsbehälter 3 ist über das Ventil 7 mit einem Mischbehälter 29 verbunden, der mit einer Rühreinrichtung ausgerüstet ist. In diesem Mischbehälter 29 kann beispielsweise eine Bindemittelemulsion hergestellt werden. Hierzu werden neben der Harzkomponente die übrigen Emulsionsbestandteile und ggf. Hilfs- und Zusatzstoffe in den Mischbehälter 29 eingebracht.

Die Vorratsbehälter 1 und 2 sind über Ventile 5 bzw. 6 über die Leitungen 1a bzw. 2a mit der Form 11 verbunden. Wie oben im Zusammenhang mit Fig. 1 ausgeführt, soll die Leitung 1a andeuten, daß eine beliebige geeignete Verbindung des Vorratsbehälters 1 mit der Form 11 vorliegt. Gleiches gilt auch für die Leitung 2a. Die inerte Flüssigkeit kann so aus dem Vorratsbehälter 2 über das Ventil 6 entweder in die Vormischkammer 23 oder in die Mischkammer 10 oder in die obere Leitung 16 oder auch über eine andere Verbindung in die Form 11 eingeleitet werden.

Der Auslaß des Mischbehälters 29 ist über ein Ventil 24 mit einer Vormischkammer 23 verbunden, die ein Entlüftungsventil 9 aufweist. Die Vormischkammer ist auslaßseitig mit einer Mischkammer 10 verbunden, die über die obere Leitung 16 mit der gleich wie in Fig. 1 aufgebauten Form 11 in Verbindung steht.

Am Bodenanschluß 15 der Form 11 ist eine Lichtschranke 28 angeordnet, welche die Passage der Flüssig/Flüssig-Phasengrenze zwischen der inerten Flüssigkeit und dem Bindemittel und/oder die Phasengrenze Luft/inerte Flüssigkeit erfassen kann.

In der unteren Leitung 17 ist eine motorgetriebene Pumpe 21 angeordnet, die auslaßseitig (druckseitig) über das Ventil 18 und einen Durchflußmesser an einen Vorratsbehälter 20, z.B. für inerte Flüssigkeit, angeschlossen ist. Der Vorratsbehälter 20 weist eine Heizeinrichtung 26 auf, mit der sein Inhalt auf eine wählbare Temperatur gebracht oder auf ihr gehalten werden kann. Damit kann beispielsweise die Temperatur des Füllstoffs und der Form und damit auch der Härtungsprozeß gesteuert werden.

In der Leitung, die das Ventil 8 mit dem Vorratsbehälter 4 für den Härter verbindet, ist ferner eine motorgetriebene Dosierpumpe 22 vorgesehen, mit der Härter in die Vormischkammer 23 eindosiert werden kann.

Zur Durchführung des erfindungsgemäßen Verfahrens wird diese Vorrichtung z.B. wie folgt betrieben (Beispiel: Verwendung eines O/W-Emulsions-Bindemittels):

Zunächst wird die Form 11 mit dem Füllstoff befüllt (Schritt A), die dann mit Wasser als Beispiel für die inerte Flüssigkeit aufgefüllt und entlüftet wird (Schritt B). Um einen Austritt des Füllstoffs aus der Form zu verhindern, ist ein Sieb 25 vorgesehen, das bei dieser Betriebsweise zumindest im Bodenbereich der Form 11 angeordnet ist. Für eine andere, später beschriebene Betriebsweise kann das Sieb 25 auch im oberen Bereich oder in beiden Bereichen der Form 11 vorgesehen sein. Es ist jeweils durch Distanzhalter 30 vom Formoberteil 13 bzw. vom Formunterteil 14 beabstandet.

Die Siebmaschenweite ist dabei so gewählt, daß der kornförmige Füllstoff zurückgehalten wird.

Wenn die Form 11 in Schritt A zunächst separat mit dem Füllstoff gefüllt wird, kann somit die Form zwei Siebe 25 aufweisen, die im Bereich des Formoberteils 13 und im Bereich des Formunterteils 14 vorgesehen sind.

Wenn die Form 11 blasenfrei mit Füllstoff und Wasser gefüllt ist, wird aus dem Vorratsbehälter 3 das Bindemittel, z.B. in Form einer O/W-Emulsion, über das Ventil 7 in den Mischbehälter 29 eingeleitet, von dem es über das Ventil 24 in die Vormischkammer 23 gelangt, wo es mit über die Dosierpumpe 22 und das Ventil 8 eindosiertem Härter vermischt wird. Nach Durchgang durch die Mischkammer 10 gelangt die Bindemittelemulsion in die Form 11, aus der sie das als inerte Flüssigkeit dienende Wasser verdrängt (Schritt C), das über die untere Leitung 17 aus der Form 11 austritt und z.B. mit der Pumpe 21 abgesaugt wird. Das Wasser gelangt über das Ventil 18 und den Durchflußmesser 27 in den Vorratsbehälter 20, wo es gelagert oder zwischengelagert wird.

Der Mischbehälter 29 kann, wie oben erwähnt, auch dazu dienen, eine Bindemittelemulsion herzustellen.

Nach Ablauf der Härtungsreaktion (Schritt D) wird der Formkörper aus der Form 11 entnommen (Schritt E) und ggf. getrocknet.

Die Vorrichtungen von Fig. 1 und von Fig. 2 können auch abweichend von der vorstehenden Beschreibung so betrieben werden, daß die inerte Flüssigkeit, hier Wasser, aus einem Vorratsbehälter (Fig. 2: Vorratsbehälter 20) über das Ventil 18 und die - dann in umgekehrtem Pumpsinne arbeitende - Pumpe 21 (Fig. 2) sowie die untere Leitung 17 durch den Bodenanschluß 15 in die Form 11 gedrückt wird, wobei über das Entlüftungsventil 9 entlüftet wird. In diesem Fall befindet sich ein Sieb 25 zumindest im oberen Teil der Form 11, die zuvor mit dem Füllstoff befüllt wurde.

Auch die Einführung des Bindemittels in die Form 11 (Schritt C) unter Ersatz des Wassers kann über die untere Leitung 17 erfolgen, wobei in diesem Fall das verdrängte Wasser oben aus der Form über die Mischkammer 10 und die Vormischkammer 23 (Fig. 2) und das Entlüftungsventil austreten kann.

Bei sämtlichen möglichen Betriebsarten können die Ventile 5, 6, 7, 8, 9, 18 und/oder 24 sowie die Pumpen 21 und 22, bei der Vorrichtung von Fig. 2 auch die Heizeinrichtung 26 des Vorratsbehälters 20, durch die Steuereinrichtung 19 gesteuert werden, wobei Teilschritte oder der gesamte Ablauf der Schritte A, B, C und D steuerbar sind. Alternativ ist Handbetrieb der Ventile ebenfalls möglich.

Durch zusätzliche Wärmeeinwirkung z.B. nach Füllung und Gelbildung in der aus der Vorrichtung entnommenen Form 11 in einem Wasserbad bis 95 °C, mit Heißluft, Wasserdampf oder durch Mikrowelleneinwirkung, kann die Härtungsreaktion so gesteuert werden, daß auf die Verwendung von Schnellbeschleunigern verzichtet werden kann.

Mit Hilfe der mit dem Durchflußmesser 27 in der unteren Leitung 17 ermittelten und errechneter Werte können die erforderliche Menge an Bindemittel und die Füllzeit für die Form unter Berücksichtigung der Bindemittelviskosität bestimmt werden. Es ist alternativ auch möglich, hierzu die Meßwerte eines im Behälter 20 installierten Niveausensors zu verwenden.

Ausgehend von den mit dem Durchflußmesser 27 ermittelten Meßwerten wird über die Steuereinrichtung 19 das Ventil 18 und damit der Zu- und Abfluß von Wasser in die Form 11 gesteuert. Die Lichtschranke 28 meldet z.B. den Austritt von Bindemittel und veranlaßt dann das Abstellen der Pumpe 21.

Die Konstruktion der Vorrichtung kann in wesentlichen Teilen der jeweiligen Verwendung angepaßt werden. Sie kann ganz oder nur in Teilen fest montiert oder örtlich ungebunden, mobil konzipiert sein, wobei die Zufuhr von inerter Flüssigkeit und Bindemittel über flexible Leitungen und handbetätigte Armaturen erfolgen kann.

Eine typische Arbeitssequenz ist zusammenfassend beispielsweise wie folgt (Fig. 2):
1. Füllen der aus der Vorrichtung entnommenen Form mit kornförmigem Füllstoff (Schritt A).
2. Einsetzen der Form 11 in die Vorrichtung, Öffnen des Entlüftungsventils 9, Schließen des Ventils 24 und des Ventils 8.
3. Rückstellen des Durchflußmessers 27, Öffnen von Ventil 18, Anschalten der Pumpe 21.
4. Erwärmen des Wassers im Vorratsbehälter 20 mit der Heizeinrichtung 26 auf die gewünschte Temperatur. Eindrücken von Wasser in die Form 11 bis zum Austritt aus dem Entlüftungsventil 9, Abstellen der Pumpe 21. Über die zur Füllung der Füllstoffzwischenräume erforderliche Wassermenge, die der Bindemittelmenge entspricht, kann die notwendige Beschleuniger- oder Härtermenge, die über die Dosierpumpe 22 eingeführt wird, eingestellt werden (Schritt B).
5. Schließen des Entlüftungsventils 9, Öffnen von Ventil 8 (Beschleunigerzufuhr) und Ventil 24 (Bindemittelzulauf). Umschalten der Pumpe 21 auf Rücklauf. Die Pumpe 21 wird mit Erreichen des Nullwertes des Durchflußmessers 27 abgeschaltet (Schritt C).
6. Härtung.
   Entnahme der Form 11 aus der Vorrichtung nach Vorhärtung bzw. Gelbildung; gegebenenfalls Ruhenlassen der Form unter Wärmeeinwirkung bis zur Durchhärtung (Schritt D).
7. Entnahme des Formkörpers aus der Form (Schritt E).

Die Ventile können per Hand oder elektronisch gesteuert werden. Entsprechende Einrichtungen sind aus der Gießharztechnik bekannt.

### BEISPIEL 1

Eine oben offene kastenförmige Form 11 (Fig. 2) mit den Innenmaßen 70 cm x 50 cm x 8 cm wird mit einem kornförmigen Füllstoff so aufgefüllt, daß die Oberfläche der Füllstoffpakkung an das durch die Distanzhalter 30 vom Formoberteil 13 beabstandete Sieb 25 angrenzt. Das als Sieb dienende feinmaschige Drahtnetz hält den Füllstoff bei der Auffüllung mit Wasser in seiner Lage zurück. Mit einem gleichartigen Drahtnetz ist das Formunterteil 14 abgedeckt. Die Form 11 wird nach dem Füllen mit dem Füllstoff über Schnellschlußkupplungen mit der übrigen Vorrichtung verbunden.

Zum Füllen der Form mit einem Innenvolumen von 28 l sind 5700 g Füllstoff (Korngröße 2 bis 4 mm, Schüttdichte 0,19 g/ml, Rohdichte 0,29 g/ml) erforderlich. Die Bindemittelmenge beträgt 11,58 kg.

Das Bindemittel liegt in Form einer O/W-Emulsion folgender Zusammensetzung vor:

| Emulsion: | |
|---|---|
| Harzanteil | 22,5 Masse-% |
| Verhältnis Harz/Wasser | 1:2,64 (massebezogen) |

| **Nr.** | **Komponente** | **(g)** | **(Masse-%)** |
|---|---|---|---|
| 1 | Polyesterharz | 1940,05 | 16,87 |
| 2 | Methylmethacrylat | 647,45 | 5,63 |
| 3 | Emulgator (W/O) | 26,45 | 0,23 |
| 4 | Beschleuniger | 26,45 (über die Dosierpumpe 22 zugeführt) | 0,23 |
| 5 | Wasser | 6858,60 | 59,64 |
| 6 | Martinal (Aluminium-hydroxid, Korngröße 40 µm flammhemmendes Mittel) | 647,45 | 11,24 |
| 7 | Durcal 40 (Calciumcarbonat, flammhemmendes Mittel) | 1292,60 | 5,63 |
| 8 | Härter | 90,85 | 0,79 |
| | | 11529,90 | 100,00 |
| | | (= 10293 ml) | |

Im Mischbehälter 29 wird die W/O-Emulsion mit den Komponenten 1-3 und 5-8 gebildet. Die Form 11 wird mit dem Füllstoff gefüllt und dann geschlossen.

Mit der Pumpe 21 wird von unten auf 25 °C erwärmtes Wasser bis zum Überlaufen am Entlüftungsventil 9 eingedrückt und damit gleichzeitig die Form und die Füllstoffpackung entlüftet. Das Ventil 18 und das Entlüftungsventil 9 werden dann geschlossen.

Aufgrund der bei der Wasserfüllung der Form ermittelten Füllmenge und Füllzeit wird die Zudosierung von Beschleuniger bzw. Härter über die Dosierpumpe 22 eingestellt.

Nach der Entlüftung ist die Form bereit zur Aufnahme des Bindemittels. Nach dem Öffnen des Ventils 24 wird die Emulsion aus dem Mischbehälter 29 in die Form 11 eingeführt, wobei der Beschleuniger über die Dosierpumpe 22 und das Ventil 8 zudosiert wird, während das Wasser nach unten über den Bodenanschluß 15 abläuft. Die Füllung der Form 11 mit der Emulsion wird durch Zuschalten der Pumpe 21 beschleunigt. Die Pumpe 21 wird mit Erreichen der der Wassermenge entsprechenden Emulsionsmenge abgeschaltet. Zur Füllung wurden 3 Minuten benötigt.

Die Form wird nach 10 Minuten mit dem Bodenteil aus der Vorrichtung gelöst, wonach eine weitere, bereits gefüllte Form in die Vorrichtung eingesetzt wird.

Das ausgehärtete Formteil kann nach 45 Minuten entformt werden. Unter Wärmezufuhr, z.B. im Wasserbad (90 °C), verkürzt sich die Härtungszeit auf ca. 15 Minuten.

Nach Trocknung verliert das Formteil ca. 99,5 % des mit der Emulsion eingebrachten Wassers, erreicht eine Dichte von 0,36 g/ml, eine Druckfestigkeit von 2,5 N/mm² und eine Wärmeleitzahl von 0,1.

### BEISPIEL 2

Bei diesem Beispiel werden ein Füllstoff mit größerer Korngröße und Glasfasermatten zur Verstärkung der Oberflächen verwendet.

Es wird eine Form gleichen Typs wie in Beispiel 1 verwendet, die jedoch um 2 cm schmäler ist (Innenmaße 70 x 50 x 6 cm). Die Form hat ein Volumen von 21 l.

| | | |
|---|---|---|
| Erforderliche Einsatzmengen | Blähton | 6825 g (Korngröße 4 bis 8 mm, Schüttdichte 0,325 g/ml, Rohdichte 0,625 g/ml) |
| | Emulsion | 10080 ml (9081 g) |

| Emulsion: | |
|---|---|
| Harzanteil | 20,17 Masse-% |
| Verhältnis Harz/Wasser | 1:3,00 (massebezogen) |

| **Nr.** | **Komponente** | **(g)** | **(Masse-%)** |
|---|---|---|---|
| 1 | Polyesterharz | 1282,23 | 14,12 |
| 2 | Methylmethacrylat | 549,40 | 6,05 |
| 3 | Emulgator (W/O) | 27,24 | 0,30 |
| 4 | Beschleuniger | 18,16 | 0,20 |
| 5 | Wasser | 5500,36 | 60,57 |
| 6 | Martinal (vgl. Beispiel 1) | 815,47 | 8,98 |
| 7 | Durcal 40 (vgl. Beispiel 1) | 815,47 | 8,98 |
| 8 | Härter | 72,65 | 0,80 |
| | | 9080,98 g | 100,00 |
| | | (10078,8 ml) | |

Am Formoberteil 13 und am Formunterteil 14 (jeweils 50 x 70 cm) wird je eine Glasfasermatte (300 g/m²) angebracht. Anschließend wird zwischen die Glasfasermatten der Füllstoff eingefüllt. Das weitere Vorgehen entspricht dem von Beispiel 1. Das Formteil wird nach 90 Minuten Lagerung im Formmantel in 90 °C heißem Wasser entformt. Man erhält eine feste Platte; die Glasfasermatten sind einwandfrei eingebunden.

Nach 14tägiger Trocknung an Luft bei einer Temperatur von 14 bis 20 °C hat die Platte eine Dichte (einschließlich der Glasmatten) von 0,56 g/ml, eine Druckfestigkeit von 5,4 N/mm² und eine Wärmeleitzahl von 0,09. Bei einer flächenbezogenen Masse von 24,0 kg/m² wurde ein bewertetes Schalldämm-Maß Rw von 35 dB ermittelt.

### BEISPIEL 3

Bei diesem Beispiel wird der Wasseranteil der eingesetzten Emulsion auf ein Minimum reduziert, dafür jedoch der Anteil feinstkörniger Füllstoffe (insbesondere Aluminiumhydroxid) erhöht; ferner wird zur weiteren Verbesserung der Feuerfestigkeit Ammoniumpolyphosphat zugesetzt.

Die Form 11 (Innenmaße 70 x 50 x 6 cm) hat ein Volumen von 21 1. Als Füllstoff wird Blähglas (Korngröße 2 bis 4 mm, Schüttdichte 0,19 g/ml, Rohdichte 0,29 g/ml) verwendet.

| | | |
|---|---|---|
| Erforderliche Einsatzmengen | Blähglas | 3990 g (Korngröße 2 bis 4 mm, Schüttdichte 0,19 g/ml, Rohdichte 0,29 g/ml) |
| | Emulsion | 7241 ml (11430 g) |

| Emulsion: | |
|---|---|
| Harzanteil | 37,14 Masse-% |
| Verhältnis Harz/Wasser | 3,6 : 1,00 (massebezogen) |

| **Nr.** | **Komponente** | **(g)** | **(Masse-%)** |
|---|---|---|---|
| 1 | Polyesterharz | 3232,40 | 28,28 |
| 2 | Methylmethacrylat | 1012,70 | 8,86 |
| 3 | Emulgator [W/O] | 32,00 | 0,28 |
| 4 | Beschleuniger | 32,00 über Dosierpumpe | 0,28 |
| 5 | Wasser | 1175,00 | 10,28 |
| 6 | Martinal | 4245,10 | 37,14 |
| 7 | Durcal 40 | 1362,45 | 11,92 |
| 8 | Ammoniumpolyphosphat | 211,45 | 1,85 |
| 9 | Härter | 126,87 | 1,11 |
| | | 11429,97 g | 100,00 |
| | | (7240,98 ml) | |

Wie in Beispiel 1 wird nach Einbringen des Füllstoffes die Form 11 mit Wasser (Temperatur 16 °C) aufgefüllt und entlüftet; danach wird, wie zuvor beschrieben, das Bindemittel in dem Maße zugeführt, in dem das Wasser abgelassen oder abgepumpt wird.

Die mit dem Bindemittel gefüllte Form wird aus der Vorrichtung entnommen. Nach 1 Stunde ist das Formteil ausgehärtet und wird entnommen. Nach 14 Tagen Trocknung bei Raumtemperatur erhält man eine sehr stabile Platte mit einer Dichte von 0,69 g/ml. Neben sehr guter Wärmedämmung weist das Material eine hohe Druckfestigkeit und gute Flammhemmung auf.

Gemäß der vorliegenden Erfindung können nicht nur die eingesetzten Verbindungen und Füllstoffe und damit die wichtigsten Eigenschaften der Formkörper, wie Wärme- und Schalldämmung, mechanische Festigkeit und Dichte, in weiten Bereichen variiert werden; es ist ferner auch möglich, z.B. durch Armieren mit Elementen aus Stahl, Holz, Beton oder Kunststoff oder durch Verstärken mit Fasern, Vliesen oder textilen Flachmaterialien, insbesondere mit Glasfasern und Glasfasergeweben, hochfeste Formteile herzustellen. Außerdem lassen sich durch spezielle Form- und Konstruktionsgestaltung, z.B. durch Einbeziehen von Hohlräumen oder Verbindungselementen, in Abhängigkeit von dem gewünschten Einsatzgebiet hochstabile Bau- und Konstruktionselemente herstellen.

Die erfindungsgemäßen Formkörper eignen sich auch besonders als oder zur Herstellung von Schalungsteilen.

Besondere Vorteile der erfindungsgemäßen Verfahrensweise sind:
- Arbeiten in geschlossenem System bei geringstem Handhabungsaufwand
- Härtung über Temperatur der inerten Flüssigkeit steuerbar
- erhebliche Verkürzung der Härtungsdauer erzielbar
- praktisch keine Rückstandsprobleme, besonders bezüglich Harzrückständen, da in Vorrats- und Mischbehältern nur nichtreagierende Komponenten vorliegen
- Harze und insbesondere Emulsionssysteme praktisch ohne Verlust verarbeitbar.

### Legende zu den Fig. 1 und 2

- 1: Vorratsbehälter für kornförmigen Füllstoff
- 1a: Leitung für kornförmigen Füllstoff
- 2: Vorratsbehälter inerte Flüssigkeit
- 2a: Leitung für inerte Flüssigkeit
- 3: Vorratsbehälter Bindemittel (ggf. Emulsion o.dgl.)
- 4: Vorratsbehälter Härter, Vernetzungsmittel
- 5: Ventil Vorratsbehälter Füllstoff
- 6: Ventil Vorratsbehälter inerte Flüssigkeit
- 7: Ventil Vorratsbehälter Bindemittel
- 8: Ventil Vorratsbehälter Härter
- 9: Entlüfungsventil
- 10: Mischkammer
- 11: Form
- 12: Formmantel
- 13: Formoberteil
- 14: Formunterteil
- 15: Bodenanschluß der Form
- 16: obere Leitung
- 17: untere Leitung
- 18: Ventil
- 19: Steuereinrichtung
- 20: Vorratsbehälter inerte Flüssigkeit
- 21: Pumpe
- 22: Dosierpumpe
- 23: Vormischkammer
- 24: Ventil
- 25: Sieb
- 26: Heizung
- 27: Durchflußmesser
- 28: Lichtschranke
- 29: Mischbehälter
- 30: Distanzhalter

## Patentansprüche

1. Verfahren zur Herstellung von Formkörpern auf der Basis eines gehärteten Bindemittels, das einen oder mehrere kornförmige Füllstoffe enthält,
durch
- Einbringen des bzw. der kornförmigen Füllstoffe sowie eines flüssigen härtbaren Bindemittels in eine Form,
- Härten des Bindemittels in der Form
und
- Entnahme des gebildeten Formkörpers aus der Form, **gekennzeichnet durch** Vornahme folgender Verfahrensschritte in der angegebenen Reihenfolge:
(A) Einbringen des kornförmigen Füllstoffs bzw. der kornförmigen Füllstoffe in die Form,
(B) Auffüllen der Form mit einer niedrigviskosen, mit dem Bindemittel nicht mischbaren oder weitgehend nicht mischbaren Flüssigkeit, die gegenüber dem Bindemittel inert oder im wesentlichen inert ist, unter Entlüftung der Form,
(C) Ersetzen der Flüssigkeit in der Form **durch** das flüssige härtbare Bindemittel,
(D) Härten des Bindemittels und
(E) Entnahme des gebildeten Formkörpers aus der Form.

2. Verfahren nach Anspruch 1, **dadurch gekennzeichnet, daß** in Schritt B die inerte Flüssigkeit durch Einlaufenlassen unter hydrostatischem Druck oder unter Pumpdruck von oben oder von unten in die Form eingeführt wird.

3. Verfahren nach Anspruch 1 oder 2, **dadurch gekennzeichnet, daß** in Schritt C
(a) das Bindemittel unter hydrostatischem Druck oder unter Pumpdruck von oben in die Form eingeführt und die inerte Flüssigkeit im unteren Teil der Form austreten gelassen oder abgepumpt wird
oder
(b) das Bindemittel unter hydrostatischem Druck oder unter Pumpdruck oder durch Ansaugen von unten in die Form eingeführt und die inerte Flüssigkeit im oberen Teil der Form austreten gelassen oder abgepumpt wird.

4. Verfahren nach einem oder mehreren der Ansprüche 1 bis 3, **dadurch gekennzeichnet, daß** in Schritt C ein Bindemittel in Form einer Wasser-in-Öl-Emulsion eingesetzt wird, deren Ölphase das Bindemittel enthält oder aus ihm besteht.

5. Verfahren nach einem oder mehreren der Ansprüche 1 bis 4, **dadurch gekennzeichnet, daß** in Schritt C als Bindemittel ein polymerisierbares Harzsystem verwendet wird, das ein oder mehrere polymerisierbare Monomere und gegebenenfalls ein oder mehrere polymerisierbare Prepolymere enthält.

6. Verfahren nach einem oder mehreren der Ansprüche 1 bis 5, **dadurch gekennzeichnet, daß** in Schritt C als Bindemittel ein Polyesterharzsystem, ein Epoxyharzsystem oder ein (Meth)acrylatharzsystem eingesetzt wird.

7. Verfahren nach einem oder mehreren der Ansprüche 4 bis 6, **dadurch gekennzeichnet, daß** in Schritt B eine inerte Flüssigkeit eingesetzt wird, welche befähigt ist, die disperse Phase einer Emulsion oder einen Teil der dispersen Phase einer Emulsion zu bilden, deren kontinuierliche Phase das härtbare Bindemittel enthält oder aus ihm besteht, vorzugsweise Wasser.

8. Verfahren nach einem oder mehreren der Ansprüche 1 bis 7, **dadurch gekennzeichnet, daß** in Schritt A anorganische und/oder organische kornförmige Füllstoffe eingesetzt werden, insbesondere Ruß, Graphit, Kreide, Gips, Zement, Aluminiumoxid, Aluminiumhydroxid, Kaolin, Phosphate, Ammoniumpolyphosphat, Montmorillonit, geblähte Mineralien, insbesondere Tone, Silicate oder Glas, und/oder organische Polymerpartikel, insbesondere geschäumte Polymerpartikel.

9. Vorrichtung zur Herstellung von Formkörpern auf der Basis eines gehärteten Bindemittels, das einen oder mehrere kornförmige Füllstoffe enthält,
insbesondere zur Durchführung des Verfahrens nach den Ansprüchen 1 bis 8,
die folgende Komponenten aufweist:
(i) eine Form (11),
(ii) einen ggf. mit der Form (11) verbindbaren Vorratsbehälter (1) für kornförmige Füllstoffe,
(iii) einen mit der Form (11) verbindbaren Vorratsbehälter (2) für eine niedrigviskose, mit dem Bindemittel nicht mischbare oder weitgehend nicht mischbare, gegenüber dem Bindemittel inerte oder im wesentlichen inerte Flüssigkeit,
(iv) einen mit der Form (11) verbindbaren Vorratsbehälter (3) für ein flüssiges, härtbares Bindemittel,
(v) eine Füll- und Entleereinrichtung (6, 7, 8, 9, 18), die mit dem Einlaß und dem Auslaß der Form (11) und dem Vorratsbehälter (2) für inerte Flüssigkeit, dem Vorratsbehälter (3) für Bindemittel und dem Vor- ratsbehälter (4) für Härter verbunden ist und die gesteuerte Zufuhr und Abführung der inerten Flüssigkeit und die gesteuerte Zufuhr des Bindemittels erlaubt, und
(vi) eine Steuereinrichtung (19), welche die Füll- und Entleereinrichtung (6, 7, 8, 9, 18) so steuert, daß folgende Schritte durchführbar sind:
(a) Auffüllen der Form (11), die den Füllstoff enthält, mit der inerten Flüssigkeit bei gleichzeitiger oder nachgeschalteter Entlüftung der Form (11)
und
(b) Einleiten des härtbaren Bindemittels und des Härters in die Form (11) unter Ersatz der inerten Flüssigkeit.

10. Vorrichtung nach Anspruch 9, **dadurch gekennzeichnet, daß** die Füll- und Entleereinrichtung (6, 7, 8, 9, 18) und die Steuereinrichtung (19) so ausgebildet sind, daß sie auch die gesteuerte Zufuhr des Füllstoffs aus dem Vorratsbehälter (1) für den Füllstoff in die Form (11) vor Schritt (a) über eine Zufuhreinrichtung (5) erlauben.

11. Vorrichtung nach Anspruch 9 oder 10, **dadurch gekennzeichnet, daß** die Steuereinrichtung (19) so ausgebildet ist, daß sie auch die Steuerung der Härtung des Bindemittels nach Schritt (b) nach Zeit und/oder Temperatur erlaubt.

12. Vorrichtung nach einem oder mehreren der Ansprüche 9 bis 11, **dadurch gekennzeichnet, daß** eine mit der Form (11) und der Füll- und Entleereinrichtung (7, 8, 9, 18) verbundene Mischkammer (10) vorgesehen ist, die mit dem Vorratsbehälter (3) für Bindemittel und dem Vorratsbehälter (4) für Härter sowie ggf. auch mit dem Vorratsbehälter (1) für kornförmigen Füllstoff und ggf. mit dem Vorratsbehälter (2) für inerte Flüssigkeit verbunden ist.

13. Vorrichtung nach einem oder mehreren der Ansprüche 9 bis 12, **dadurch gekennzeichnet, daß** die Füll- und Entleereinrichtung (7, 8, 9, 17, 18) und die Steuereinrichtung (19) so ausgebildet sind, daß sie die Zufuhr der inerten Flüssigkeit aus einem Vorratsbehälter (20) in den Auslaß der Form (11) sowie die Abführung der inerten Flüssigkeit aus der Form (11) in den Vorratsbehälter (20) zurück über eine Pumpe (21) erlauben.

14. Vorrichtung nach einem oder mehreren der Ansprüche 9 bis 13, **dadurch gekennzeichnet, daß** die Steuereinrichtung (19) ein Mikrocomputersystem mit einer zentralen Recheneinheit (CPU), einem Schreib/Lese-Speicher (RAM), einem Festwertspeicher (ROM) und einem Bussystem ist, das nach vorgegebenem bzw. vorgebbarem Programm die Füll- und Entleereinrichtung (5, 6, 7, 8, 9, 10, 18) steuert.

15. Formkörper, erhältlich nach dem Verfahren nach einem der Ansprüche 1 bis 8.

16. Verwendung der Formkörper nach Anspruch 15 als Baustoffe oder zur Herstellung von Baustoffen, insbesondere von Leichtbaustoffen.

## Claims

1. Process for producing mouldings from a hardened bonding material containing one or more granular fillers, consisting of
- Feeding of the granular filler or fillers and a liquid, hardenable bonding material into a mould,
- Hardening of the bonding material in the mould
and
- Removal of the completed moulding from the mould, the process being **characterised by** the following process steps in sequence:
**(A)** Feeding of the granular filler or fillers into the mould,
**(B)** Filling of the mould with a low viscosity fluid, which is unmixable or substantially unmixable with the bonding material and which is inert or substantially inert with respect to the bonding material, by venting of the mould,
**(C)** Replacement of the fluid in the mould with the liquid, hardenable bonding material,
**(D)** Hardening of the bonding material, and
**(E)** Removal of the moulding from the mould.

2. Process according to claim **1, characterised in that** in step **B** the inert fluid is fed into the mould under hydrostatic pressure or pump pressure from above or from below the mould.

3. Process according to claims **1** or **2**, **characterised in that** in step **C**
**(a)** the bonding material is fed under hydrostatic pressure or pump pressure from above the mould and the inert fluid is allowed to drain out or is pumped out from the bottom of the mould or
**(b)** the bonding material under hydrostatic pressure or pump pressure or by suction is fed into the mould from below and the inert fluid is allowed to run out or is pumped out from the top of the mould.

4. Process according to one or more of the claims from **1** to **3**, **characterised in that** in step **C** the bonding material consists of a water-in-oil emulsion where the oil phase contains bonding material or consists entirely of bonding material.

5. Process according to one or more of the claims from **1** to **4**, **characterised in that** in step **C** the bonding material consists of a polymerizable resin system containing one or more polymerizable monomers and also one or more polymerizable prepolymers.

6. Process according to one or more of the claims from **1** to **5**, **characterised in that** in step **C** the bonding material consists of a polyester resin system, an epoxy resin system or a (meth)acrylate resin system.

7. Process according to one or more of the claims from **4** to **6**, **characterised in that** in step **B** an inert fluid, preferably water, is used which is capable of forming the discontinuous phase of an emulsion or part of the discontinuous phase of an emulsion whose continuous phase contains or consists entirely of a hardenable bonding material.

8. Process according to one or more of the claims from **1** to **7**, **characterised in that** step **A** uses an inorganic and/or organic granular filler consisting in particular of carbon black, graphite, chalk, gypsum, cement, aluminium oxide, aluminium hydroxide, kaolin, phosphate, ammonium polyphosphate, Montmorillonite, blown minerals, in particular clay, silicate or glass, and/or organic polymer particles and foamed polymer particles.

9. Device for producing mouldings from a hardened bonding material containing one or more granular fillers, and in particular designed to perform the process according to claims **1** to **8**,and comprising the following components:
**(i)** a mould **(11),**
**(ii)** a storage tank **(1)** for granular filler, connected where necessary to the mould **(11),**
**(iii)**a storage tank **(2),** connected to the mould **(11),** for low viscosity fluid which is unmixable or substantially unmixable with the bonding material and which is inert or substantially inert with respect to the bonding material,
**(iv)** a storage tank **(3)**, connected to the mould **(11),** for a liquid, hardenable bonding material,
**(v)** a filling and drainage device **(6, 7, 8, 9, 18)** connecting the mould **(11)** inlet and outlet to the storage tank **(2)** for the inert fluid, to the storage tank **(3)** for the bonding material, and the storage tank **(4)** for the hardener, this device controlling the feeding and draining of the inert fluid and controlling the feeding of the bonding material and
**(vi)** a control unit **(19)** controlling the filling and drainage device **(6, 7, 8, 9, 18)** so that the following process steps are performed:
**(a)** filling the mould **(11)** containing filler with the inert fluid at the same time as, or after venting of the mould **(11),** and
**(b)** feeding of the hardenable bonding material and the hardener into the mould **(11)** to take the place of the inert fluid.

10. Device according to claim **9, characterised in that** the filling and drainage device **(6, 7, 8, 9, 18)** and the control unit **(19)** are designed so that they also permit controlled feeding of the filler from the storage container **(1)** to the mould **(11)** before step **(a)** by means of a feeding device **(5).**

11. Device according to claim **9** or **10, characterised in that** the control unit **(19)** is designed so that it also permits control of the hardening of the bonding material after step **(b)** after a set time and/or temperature.

12. Device according to one or more of the claims from **9** to **11, characterised in that** the device has a mixing chamber **(10)** connecting the mould **(11)** and the filling and drainage device **(7, 8, 9, 18)** to the storage tank **(3)** for the bonding material and the storage tank **(4)** for the hardener and, where required, to the storage tank **(1)** for the granular filler and, where necessary, to the storage tank **(2)** for the inert fluid.

13. Device according to one or more of the claims from **9** to **12, characterised in that** the filling and drainage device **(7, 8, 9, 17, 18)** and the control unit **(19)** are designed so that they permit feeding of the inert fluid out of a storage tank **(20)** into the outlet of the mould **(11)** and also the drainage of the inert fluid out of the mould **(11)** back into the storage tank **(20)** by means of a pump **(21).**

14. Device according to one or more of the claims from **9** to **13, characterised in that** the control unit **(19)** is a microprocessor system with a central processing unit **(CPU),** a random access memory **(RAM),** a read only memory **(ROM)** and a bus system which controls the filling and drainage device **(5, 6, 7, 8, 9, 10, 18)** according to an existing or prepared program.

15. Mouldings produced using the process according to one of the claims from **1** to **8.**

16. Use of the mouldings according to claim **15** as building material or for the manufacture of building materials and in particular lightweight building material.

## Revendications

1. Procédé de production d'objets moulés à partir d'un agent liant durci contenant une ou plusieurs matières de remplissage granuleuse(s)consistant en
- l'introduction dans un moule de la ou des matière(s) de remplissage granuleuse(s) ainsi que d'un agent liant liquide durcissable, le durcissement de l'agent liant dans le moule et
- le démoulage de l'objet moulé formé, **caractérisé par** l'adoption des étapes de processus suivantes dans l'ordre indiqué :
**(A)** versement dans le moule de la ou des matière(s) de remplissage granuleuse(s),
**(B)** remplissage du moule avec un liquide à faible viscosité non miscible ou en grande partie non miscible avec l'agent liant, ledit liquide étant inerte ou sensiblement inerte par rapport à l'agent liant, par purge du moule,
**(C)** remplacement du liquide dans le moule par l'agent liant liquide durcissable,
**(D)** durcissement de l'agent liant et
**(E)** démoulage de l'objet moulé formé.

2. Procédé selon la revendication **1 caractérisé en ce qu'**à l'étape **B** le liquide inerte est introduit dans le moule sous pression hydrostatique ou sous pression par pompe par le haut ou par le bas.

3. Procédé selon la revendication **1** ou **2 caractérisé en ce qu'**à l'étape **C**
**(a)** l'agent liant est introduit dans le moule sous pression hydrostatique ou sous pression par pompe par le haut et le liquide inerte dans la partie inférieure du moule est évacué par écoulement ou par pompage ou
**(b)** l'agent liant est introduit dans le moule par le bas sous pression hydrostatique ou pression par pompe ou par aspiration et le liquide inerte dans la partie supérieure du moule est évacué par écoulement ou par pompage.

4. Procédé selon l'une ou plusieurs des revendications **1** à **3**, **caractérisé en ce qu'**à l'étape **C** l'agent liant mis en oeuvre est une émulsion eau dans huile dont la phase huileuse contient l'agent liant ou en est constituée.

5. Procédé selon l'une ou plusieurs des revendications **1** à **4 caractérisé en ce que** l'agent liant mis en oeuvre à l'étape **C** est un système de résine polymérisable contenant un ou plusieurs monomère(s) polymérisable(s) et le cas échéant un ou plusieurs prépolymère(s) polymérisable(s).

6. Procédé selon l'une ou plusieurs des revendications **1** à **5**, **caractérisé en ce que** l'agent liant mis en oeuvre à l'étape **C** est un système de résine polyester, un système de résine epoxy ou un système de résine (méth)acrylate.

7. Procédé selon l'une ou plusieurs des revendications **4** à **6**, **caractérisé en ce qu'**à l'étape **B** un liquide inerte est mis en oeuvre, ledit liquide étant rendu apte à former la phase dispersée d'une émulsion ou une partie de la phase dispersée d'une émulsion dont la phase continue contient l'agent liant durcissable ou en est constituée, de préférence de l'eau.

8. Procédé selon l'une ou plusieurs des revendications **1** à **7 caractérisé en ce qu'**à l'étape **A** des matières de remplissage granuleuses inorganiques et/ou organiques sont mises en oeuvre, notamment du noir de carbone, du graphite, de la craie, du gypse, du ciment, de l'oxyde d'aluminium, de l'hydroxyde d'aluminium, du kaolin, du phosphate, du polyphosphate d'ammonium, de la Montmorillonite, des minéraux soufflés, en particulier des argiles, des silicates ou du verre et/ou des particules de polymères organiques, en particulier des particules de polymères expansés.

9. Appareil de production de corps moulés à partir d'un agent liant durci contenant une ou plusieurs matière(s) de remplissage granuleuse(s), destiné en particulier à l'exécution du processus selon les revendications **1** à **8,** présentant les éléments suivants :
**(i)** un moule **(11),**
**(ii)** un réservoir **(1)** pour des matières de remplissage granuleuses pouvant le cas échéant être relié au moule **(11),**
**(iii)** un réservoir **(2)** pouvant être relié au moule **(11)** pour un liquide à fable viscosité non miscible ou en grande partie non miscible avec l'agent liant, ledit liquide étant inerte ou sensiblement inerte par rapport à l'agent liant,
**(iv)** un réservoir **(3)** pouvant être relié au moule **(11)** pour un agent liant liquide durcissable,
**(v)** un dispositif de remplissage et de vidage **(6, 7, 8, 9, 18)** relié à l'arrivée et à la sortie du moule **(11),** au réservoir **(2)** pour liquide inerte, au réservoir **(3)** pour agent liant et au réservoir **(4)** pour durcisseur et permettant l'alimentation et l'évacuation commandée du liquide inerte et l'alimentation commandée de l'agent liant, et
**(vi)** un dispositif de commande **(19)** commandant le dispositif de remplissage et de vidage **(6, 7, 8, 9, 18)** de sorte que les étapes suivantes puissent être réalisées :
**(a)** le remplissage du moule **(11)** contenant la matière de remplissage avec le liquide inerte avec purge simultanée ou différée du moule **(11)** et
**(b)** l'introduction de l'agent liant durcissable et du durcisseur dans le moule **(11)** par remplacement du liquide inerte.

10. Appareil selon la revendication **9**, **caractérisé en ce que** le dispositif de remplissage et de vidage **(6, 7, 8, 9, 18)** et le dispositif de commande **(19)** sont conçus de façon à permettre également l'alimentation commandée de la matière de remplissage depuis le réservoir **(1)** de matière de remplissage dans le moule **(11)** avant l'étape **(a)** au moyen d'un dispositif d'alimentation **(5).**

11. Appareil selon la revendication **9** ou **10 caractérisé en ce que** le dispositif de commande **(19)** est conçu de façon à permettre également la commande du durcissement de l'agent liant après l'étape **(b)** en fonction du temps et/ou de la température.

12. Appareil selon l'une ou plusieurs des revendications **9** à **11 caractérisé en ce qu'**une chambre de mélange **(10)** reliée au moule **(11)** et au dispositif de remplissage et de vidage **(7, 8, 9, 18)** est prévue, ladite chambre étant reliée au réservoir **(3)** pour agent liant et au réservoir **(4)** pour durcisseur ainsi que, le cas échéant, au réservoir **(1)** pour matière de remplissage granuleuse et également, le cas échéant, au réservoir **(2)** pour liquide inerte.

13. Appareil selon l'une ou plusieurs des revendications **9** à **12, caractérisé en ce que** le dispositif de remplissage et de vidage **(7, 8, 9, 18)** et le dispositif de commande **(19)** sont conçus de façon à permettre l'alimentation du liquide inerte depuis un réservoir **(20)** dans la sortie du moule **(11)** ainsi que l'évacuation du liquide inerte depuis le moule **(11)** dans le réservoir **(20)** au moyen d'une pompe **(21).**

14. Appareil selon l'une ou plusieurs des revendications **9** à **13 caractérisé en ce que** le dispositif de commande **(19)** est un système de micro-ordinateur avec une unité centrale **(CPU),** une mémoire vive **(RAM),** une mémoire morte **(ROM)** et un système bus, qui, selon un programme prédéfini ou prédéfinissable, commande le dispositif de remplissage et de vidage **(5, 6, 7, 8, 9, 10, 18).**

15. Corps moulés pouvant être obtenus par le procédé selon l'une de revendications **1** à **8.**

16. Utilisation des corps moulés selon la revendication **15** en tant que matériau de construction ou dans la production de matériaux de construction, en particulier de matériaux de constructions légers.
